# EUROPEAN PATENT SPECIFICATION

(11) **EP 4 556 147 B1**
(45) Date of publication and mention of the grant of the patent: **22.04.2026**
(21) Application number: 24211350.4
(22) Date of filing: 07.11.2024
(51) Int. Cl.: B23D 47/02, B23D 47/04, B27B 5/065

(54) **PANEL CUTTING MACHINE AND RELATED OPERATING METHOD**
SCHNEIDEMASCHINE UND ZUGEHÖRIGE BETRIEBSVERFAHREN
MACHINE À DÉCOUPER ET PROCÉDÉ DE FONCTIONNEMENT ASSOCIÉ

(30) Priority: 09.11.2023 IT 202300023628
(43) Date of publication of application: 21.05.2025
(73) Proprietor: Naldi, Valter, 40137 Bologna (IT)
(72) Inventor: Naldi, Valter, 40137 Bologna (IT)

(56) References cited:
- EP-A1- 1 726 404
- EP-B1- 2 251 127
- EP-B1- 3 647 004
- IT-A1- 202100 027 578

## Description

### TECHNICAL FIELD

The invention relates to a cutting machine and to a relative cutting method for cutting panels with a flat shape.

### PRIOR ART

In the industry dealing with the processing of panels made of wood, polymers, composite materials, fibre-cement or the like, a cutting machine is known, which comprises a support frame defining a substantially horizontal support and/or feeding plane for at least one panel made of wood or the like; a cutting station; a main pushing device for moving at least one first panel forward and, if necessary, backward in a first direction through the cutting station; a secondary pushing device for moving at least one second panel forward and, if necessary, backward in the first direction through the cutting station; and a cutting device consisting of a saw carriage mounted in the cutting station so as to move in a second direction and along a cutting plane perpendicular to the first direction in order to cut the panels.

The feeding plane generally consists of a roller device mounted upstream of the cutting station, whereas the output table, located downstream of the cutting station, generally consists of one or more air cushion planes to facilitate the handling and unloading of the panels being processed.

In addition, the continuous application and implementation of automation in production processes led to the integration, in some cutting machines, of a robotic manipulator mounted downstream of the cutting station or of the output table to retrieve the components cut from the original panels by means of the cutting device and definitively unload them from the cutting machine or feed them again to the main pushing device and/or to the secondary pushing device for the execution of further cuts by means of the same cutting station.

A trapdoor for the automatic unloading of swarf is provided between the cutting station and the output table.

The robotic manipulator comprises a base, a system of articulated arms connected to one another and to the base and a panel pick-up unit coupled to the articulated arms.

The panel pick-up unit comprises a frame coupled to the telescopic arms in a rotary manner and supports one or more movable arms provided with respective suction cups connected to a suction device.

However, known cutting machines of the type described above suffer from some drawbacks deriving from the fact that the robotic manipulator with the suction cup gripping system can move one single panel at a time and, because of this, only one panel can be cut in each cutting cycle; and all of this despite the fact that cutting machines of the type described above can effectively cut several overlapping panels, when they must be cut with the same cutting scheme.

It should be noted here that "just-in-time" production, which is prevalent in modern industry, requires low and medium production volumes, which, as far as the production of the various components is concerned, requires the cutting of one, or at most three or four panels, for each different cutting scheme.

Recent studies carried out on the production of a large audience of users of cutting machines showed a typical production consisting of a percentage of cutting schemes with one single panel equal to thirty-eight percent, cutting schemes with two panels equal to thirty-six percent, cutting schemes with three panels equal to fourteen percent and cutting schemes with four panels equal to twelve percent.

This type of production applied to cutting machines with robotic manipulator for panel handling and unloading has encouraged studies on the implementation, in the aforementioned robotic manipulators, of handling systems by means of panel pushing members, without prejudice to the unloading system of the panels carried out individually by means of the suction cups of the same robotic manipulator. The unloading by means of the suction cups is also determined, in addition to other factors, by the need to form stable mixed stacks of panels of various sizes on the unloading pallets, placing the panels side by side and on top of one another according to their size and to the size of the pallets.

To this regard, patents EP3533572B1 filed by Homag Plattenaufteiltechnik GmbH and EP3647004B1 filed by Biesse SPA disclose a particular gripping frame, which, in addition to the gripping system with the suction cups, is provided with a system of movable poles that cooperate with one another to laterally lock a stack of panels, moving it to the various work areas of the cutting machine, without prejudice to the fact that the unloading of the cut panels from the plane downstream of the cutting station is entrusted to the suction cup system capable of picking up one single panel at a time or several panels at a time as long as they are side by side.

In particular EP 3 647 004 B1 discloses a cutting machine according to the preamble of claim 1 and EP 1 726 404 A1 discloses a method according to the preamble of claim 13.

The problem with these solutions lies in the fact that the adhesion between panels with smooth and/or glossy surfaces is very high and this means that the detachment of the lifted panel from the one below is never guaranteed, even if the lifting times are greatly extended. In fact, this problem inhibits the use of these solutions as it can happen that the accidental lifting and the consequent falling of the underlying panel in a position different from its original one causes continuous stops of the machine with very significant production losses.

Given the unreliability of these mixed systems, in which stacks of panels are moved together, but one single panel is picked up with suction cups, solutions such as those described in patents EP4005715B1 filed by SCM Group and EP4032671B1 filed by SCM Group have been devised, which disclose hybrid machines that are designed, or in any case suited, to use the robotic manipulator only when applying cutting schemes with one single panel, then returning to the traditional cutting with an operator for moving and unloading the panels when cutting schemes must be carried out which entail the cutting of several panels for each cutting cycle.

The alternative for machines with robotic manipulators is to always cut one single panel at a time, even when the cutting schemes would allow for the cutting of a stack of panels, but in doing so the advantage caused by automation is outweighed by low productivity.

### DESCRIPTION OF THE INVENTION

Therefore, one of the objects of the invention is to provide a cutting machine with a panel support plane that has the particularity of being able to hold the panel or panels supported by it, in order to avoid uncontrolled movements of the panels when they are parked in the different work areas of the cutting machine and are waiting to be moved.

A further object of the invention is to move the panels being processed, when they are one top of one another, quickly and reliably by means of a robotic manipulator.

Hence, the invention relates to a cutting machine in which the action of pneumatically holding at least one lower panel of a stack of panels takes place in combination with the action of handling at least one upper panel of the same stack by means of the robotic manipulator.

According to the invention, there is provided a cutting machine as defined by claim 1 and a method as defined by claim 13.

Preferred embodiments are defined by the dependent claims.

The invention will therefore be described, by way of explanation, but not by way of limitation, according to its preferred embodiments, but it is to be understood that variations and/or modifications can be made by people skilled in the art without for this reason going beyond the scope of protection, as defined by the appended claims.

### BRIEF DESCRIPTION OF THE DRAWINGS

The invention will be best understood upon perusal of the following description of some preferred embodiments, with reference to the following accompanying drawings:
- figure 1 schematically shows a plan view of a cutting machine according to the invention; said cutting machine is provided with a robotic manipulator;
- figure 2 shows a side view from the right of the cutting machine of figure 1, highlighting a function of transferring and positioning first panels produced in a cutting station, which, in this case, is carried out by means of a robotic manipulator;
- figure 3 shows a plan view of a first embodiment of a panel supporting and moving plane of the cutting machine;
- figure 4 shows a side view of the plane of figure 3;
- figure 5 shows a plan view of a second embodiment of a panel supporting and moving plane of the cutting machine;
- figure 6 shows a side view of the plane of figure 5;
- figure 7 shows a plan view of the cutting machine with the robotic manipulator in operation; this robotic manipulator, after having picked up the longitudinal strips that were just cut in the cutting station, rotates these longitudinal strips in order to move them from a parking zone to a transversal cutting zone and against a reference square;
- figure 8 shows a front view of the transverse cutting zone of the cutting machine while positioning the strips against the reference square;
- figure 9 shows a side view of the cutting machine while the robotic manipulator picks up and lifts a cut panel; and
- figure 10 shows a plan view of the cutting machine while the robotic manipulator picks up and unloads cut panels.

### PREFERRED EMBODIMENTS OF THE INVENTION

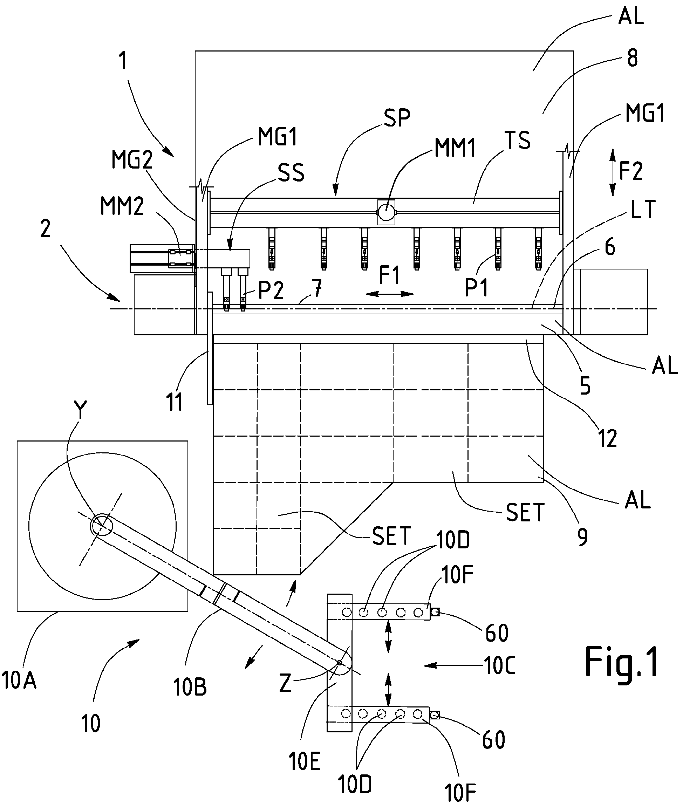

In the embodiment described herein, with reference to figures 1 to 10, number 1 indicates the cutting machine for panels (P) according to the invention.

For the purposes of this disclosure, the terms "panel" (P), "strip" (STR), etc. must all be considered as synonymous and as substantially flat elements (for example, panels of various sizes for the construction of furniture, panels of plastic material or relative strips, etc.) suited to be cut by means of the cutting machine 1 according to the invention or panels resulting from the cutting carried out by means of the same cutting machine 1.

Furthermore, in this description, the term "stack" is to be understood as a vertically stacked set of two or more panels (P) or strips (STR).

The cutting machine 1 is provided with an electronic control unit (numerical control or electronic system) (not shown), which is intended to control and manage a plurality of components of the cutting machine 1, which are better identified below.

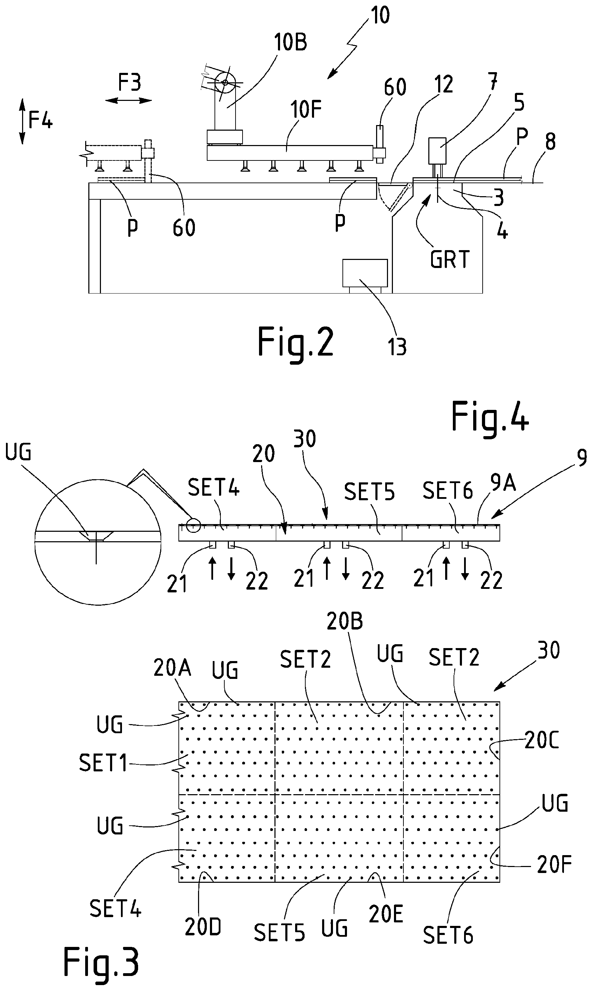

The cutting machine 1 is of the horizontal type with a cutting station 2 of the type with a cutting assembly (GRT) with a movable tool-holder carriage (figure 2), which can slide and is operated in a known manner along a base 3 (figure 2) according to directions and ways defined by an arrow (F1) (figure 1) identifying a direction substantially transverse to the feeding direction of the panels (P) along the cutting machine 1. However, in other embodiments, two or more cutting stations (2) can be present.

During the active cutting step, the tool or tools (one single cutting blade 4, mounted on the cutting assembly (GRT), is visible in figure 2, whereas the possible scorer is not shown) are lifted (or lowered in a different machine type) above a base work plane 5 (figures 1 and 2) along the base 3, while they are lowered (or lifted in a different machine type) during the step of returning to the start-of-cut position.

As it is known, in some cutting machines there generally are two cutting tools, a cutting tool (cutting blade 4) and a scorer tool (not shown), and during the cutting step they both slide within a cutting slit 6 (figure 1) obtained in the base work plane 5, whose middle line is generally defined as cutting line (LT) (figure 1).

As shown in the non-limiting example of figure 2, a known upper pressing member 7 is configured, during the cutting step, to lock the panels (P) on the base work plane 5 by means of a known vertical movement.

During the positioning of the panels (P), before the cut, the upper pressing device 7 always is in a lifted position.

In a known manner, the cutting machine 1 is provided with a main pushing device (SP), in the form of an overhead crane, provided with a first plurality of grippers (P1) and possibly with a secondary pushing device (SS) equipped with a second plurality of grippers (P2) (figure 1).

The cutting machine 1 for panels (P) normally comprises a feeding plane 8 located upstream of the cutting station 2 (figures 1, 2). Said feeding plane 8 can be, for example, of the roller type (but, alternatively, it could also be of a different nature) and can be provided with optional rotation means (not shown) for rotating the panels (P) and/or portions thereof in order to obtain the orientation needed to carry out the various cuts to size entailed in the cutting scheme to be performed.

In other words, this preliminary orientation before the cuts is carried out, with known means that are not shown herein, upstream of the cutting station 2 on the feeding plane 8.

Therefore, the work area (AL) (figure 1) of the cutting machine 1 comprises, in sequence, the aforementioned feeding plane 8, the aforementioned base work plane 5 and continues past the base work plane 5 in the form of one or more support planes 9; the feeding plane 8, the base work plane 5 and the support plane 9 preferably are all arranged at the same level, but not necessarily.

In addition, the work area (AL) could also comprise at least one complementary support or temporary parking plane (not shown in the accompanying figures) for the panels (P) or for the strips (STR) that require a further processing step. This complementary support or temporary parking plane (not shown in the accompanying figures) could also be external to the cutting machine 1.

Said at least one complementary support or temporary parking plane (not shown in the accompanying figures) can be arranged at the same level as the feeding plane 8 and/or the base work plane 5 and/or at least one support plane 9 or be at a different level than one or all of said feeding and moving plane 8, base work plane 5 or support plane 9.

The support plane (or planes) 9 downstream of the cutting station 2 is intended to support the panels (P) and/or the strips (STR) and any other cut portions exiting the cutting station (2) and have them slide, so as to allow for their correct orientation and possible reinsertion in the cutting machine 1, for example by means of a robotic manipulator 10 configured to grip at least one element chosen from a panel (P), a strip (STR) or another laminar component and transport it onto the entire aforementioned support plane 9 (figures 1, 2, 7, 8, 9, 10) (see below).

In a known manner, the main pushing device (SP) and the secondary pushing device (SS), by means of the relative grippers (P1), (P2), are configured to pick up the various elements to be cut (panels (P), strips (STR), etc.) from the feeding plane 8 (or from the support plane 9) and to position them, according to the set program, on the cutting line (LT) where the cutting of said elements takes place by means of the cutting station 2 and, in particular, by means of the blade 4.

The operating field of the main pushing device (SP) extends above the feeding plane 8, which, therefore, has a width almost coinciding with that of the cutting line (LT) and a length almost coinciding with the usable stroke of the main pushing device (SP) determined by the rear limit stop in its retracted position (not shown) and by the cutting line (LT) in its advanced position.

However, in some cutting machines, the rear limit stop of the main pushing device (SP) can be extended to allow the panels (P) to be automatically loaded from an area behind the feeding plane 8 and the front limit stop can be extended beyond the cutting line (LT) and up to and/or near the support plane 9.

In the embodiment shown herein, on the main pushing device (SP) and, in particular, on a cross member (TS) thereof (figure 1), there are fixed the aforementioned grippers (P1) for locking and transporting the panels (P) and/or the strips (STR) to be cut to size.

The secondary pushing device (SS) (figure 1) has a usable stroke almost identical to that of the main pushing device (SP) and has at least one end that is forced to slide along respective second guiding means (MG2) (figure 1) parallel to the first guiding means (MG1) of the main pushing device (SP).

Furthermore, the main pushing device (SP) is operated, along the first guiding means (MG1), by first longitudinal driving means (MM1) of the known type (figure 1), whereas the secondary pushing device (SS) is operated along the second guiding means (MG2) by second longitudinal driving means (MM2) of the known type (figure 1).

In the solution shown herein, the secondary pushing device (SS) and the main pushing device (SP) are located and operate at different heights with respect to the work area (AL) in order to avoid mutual interference and permit the respective independent movements along the same work area (AL).

In a known manner, therefore, the pushing devices (SP) and (SS) can move horizontally according to the direction and the ways identified by an arrow (F2) (figure 1) substantially perpendicular to the cutting line (LT) and, hence, to the aforementioned arrow (F1) according to a direction substantially parallel to the feeding direction of the panels in the cutting machine (1).

As shown in figures 1, 7, 8, 10, in the area generally used for the transverse cutting of the strips (STR) or of the panels (P) (left part of the drawings), a reference square 11 is provided so that the strips (STR) or the panels (P) can stroke against it in order to be subsequently cut transversely at 90 degrees.

According to figure 2, a trapdoor 12 for unloading the trimming residues is located between the base work plane 5 and the support plane 9.

The trapdoor 12 (figure 2) is therefore located downstream of the cutting station 2 with respect to the normal flow of the panels (P) (and/or of the strips (STR)).

This trapdoor 12 is used to automatically unload, in a known manner and under the work area (AL), the swarf (trimming residues) that is generated in the area of the cutting station 2.

A container 13 for collecting swarf (trimming residues) is located under the unloading trapdoor 12 (figure 2).

Alternatively, a conveyor belt (not shown) can be provided for the automatic removal of swarf.

As already mentioned above, the cutting machine 1 according to the invention is provided with the robotic manipulator 10 located downstream of the feeding plane 8 and of the cutting station 2 for picking up and positioning, for example, strips (STR) and/or panels (P) generated (starting from the original panels (P) and/or from the strips (STR)) in the cutting station 2 on at least the entire support plane 9.

In a known manner, the robotic manipulator 10 is controlled by the electronic control unit of the cutting machine 1, but it could also be controlled by a control and management unit of its own (not shown), which is configured to communicate (exchange data) with the electronic control unit of the cutting machine 1 (for instance, according to a "master-slave" operating mode).

Therefore, the electronic control unit is configured to operatively manage all the parts of the cutting machine 1 and, hence, all its operational phases, directly or indirectly including those of the robotic manipulator 10.

The robotic manipulator 10, depending on its articulated arm, can also be placed in a position different from that shown in the accompanying figures, in order to have access to different zones of the work area (AL) of the cutting machine 1.

In the non-limiting solution shown in the attached figures, the robotic manipulator 10 is located externally and next to the support plane 9 downstream of the cutting station 2 and beside the reference square 11.

The robotic manipulator 10 is configured to move the cut panels (P) and/or strips (STR) or stacks of strips (STR) away from the zone immediately downstream of the cutting station 2, placing them in a parking zone on the support plane 9 (see below).

Furthermore, the robotic manipulator 10 is configured to feed the cut strips (STR) and/or the cut panels (P) again to the main pushing device (SP) and/or to the secondary pushing device (SS) for the execution of further transverse cuts (see below).

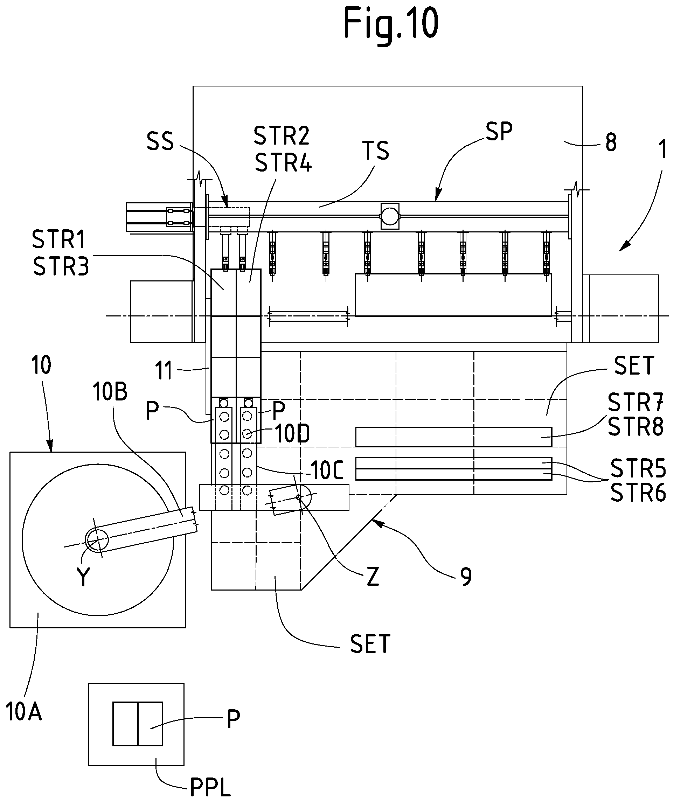

The robotic manipulator 10 is configured to unload the cut panels (P) onto dedicated components such as boards, pads, pallets (PPL) (figure 10) and/or onto roller tracks (not shown) for their manual or automatic removal.

In a known manner, the robotic manipulator 10 (figures 1, 7, 8, 9, 10) comprises a base 10A, a system of articulated arms 10B connected to one another and to the base 10A and a pick-up unit 10C fixed to the articulated arms 10B.

In a known manner, the robotic manipulator 10 could consist of a manipulator member with Cartesian axes movements.

The robotic manipulator 10, which acts as a pick-up unit, can rotate around a relative axis (Y).

Advantageously, though not necessarily, the pick-up unit 10C of the robotic manipulator 10 comprises a plurality of suction cups 10D, which, in a known manner, are configured to adhere to an upper surface of at least one panel (P) or of a strip (STR). The panels (P) (or the strips (STR)) to be moved by the robotic manipulator 10 are gripped by means of the suction cups 10D.

In particular, the pick-up unit 10C (figure 1) comprises a cross member 10E hinged, in a known manner, to the articulated arms 10B in the area of an axis (Z) and two arms 10F on which the aforementioned suction cups 10D are mounted. These arms 10F, by means of known means, can be moved towards/away from one another, sliding on the cross member 10E, in order to adjust the pick-up system according to the dimensions of the strips (STR) or of the panels (P) to be handled.

At the ends of the two arms 10F there are mounted two poles 60 (figures 1, 2) for the transferring the panels (P) (or the strips (STR)) to and placing them in a special parking zone on the support plane 9 when necessary, namely when other strips (STR) and/or panels (P) engage the transverse zone along the reference square 11.

These poles 60, in the rest position, are located above the support plane 9 and above the height of the maximum stack of panels that can be cut with the cutting machine 1 and, by means of known means which are not shown herein, can translate vertically according to a direction and ways identified by an arrow (F4) (figures 2, 8, 9) until they reach the vicinity of the support plane 9.

Therefore, when needed, the two poles 60 can be lifted so as not to interfere with the panels (P) or the strips (STR) on the support plane 9 or, on the contrary, they can be lowered (according to the arrow (F4) in a substantially vertical direction onto the support plane 9 in order to be able to push one or more strips or stacks of strips (STR) at a time, according to the arrow (F3) arranged along a direction substantially parallel to that of the arrow (F2), and place them in a parking zone, on the support plane 9, when their immediate transverse cutting is not possible. Both situations are shown in figure 2.

In other words, the handling of the strips (STR) and their precise positioning along the support plane 9 can be carried out by means of the aforementioned poles 60 of the robotic manipulator 10 according to a direction and ways identified by the arrow (F3) (figure 2) perpendicular to the cutting line (LT).

As already mentioned above, one of the objects of the invention is to provide a cutting machine 1 with a work area (AL) that has the particularity of being able to temporarily hold the panels (P) (or the strips (STR)) resting on it, when they are waiting to be moved and in order to prevent them from moving in an uncontrolled manner.

For this purpose, figures 3 and 4 show a first solution when the work area (AL) is an air-cushion plane.

As it is known, an "air cushion plane" uses the air jets coming out of a series of nozzles (UG) (figure 4) to slightly lift the panels (P) during their movement along the cutting machine 1. The nozzles (UG) are integrated into the work area (AL) and in particular, in this case, in the support plane 9 out of the cutting station 2, as shown in figure 4.

This forbids a direct contact between the lower surfaces of the panels (P) and the surface 9A of the support plane 9 (figure 4). All of this to prevent the direct rubbing between the lower surface of the panel (P) and the surface 9A of the support plane 9 (or of the work area (AL)) from causing scratches and damages of various kinds on the lower surface of the panel (P) itself. In fact, everything must be done to guarantee, as much as possible, the integrity of the lower surface of the panel (P) during the entire movement along the cutting machine 1. In fact, if damaged by the handling and cutting operations, the panel (P) or the strip (STR) should then be rejected, with a significant economic loss for the manufacturer.

As a matter of fact, precisely for these reasons, it should be noted here that the adoption of air cushion planes is extended to almost all cutting machines of the type covered by this document and, in particular, also to the area of the feeding planes 8 and to the base work plane 5 thereof.

In addition, the "air cushion" created by the nozzles (UG), interposed between the lower surfaces of the panels (P) and the surface 9A of the support plane 9 (as shown in figure 4), facilitate the translation and free sliding of the panels (P) with the means specially designed for this purpose.

In a known manner and as shown in the enlargement of figure 4, each nozzle (UG) can have a shape that is flared towards the outside so as to have as much output pressure energy as possible to validly support the panels (P).

In some solutions, a mechanical ball valve is located in the area of the nozzles and determines the opening thereof when pressed by the weight exerted by the overlying panels (P).

In the accompanying figures, the support plane 9 is therefore equipped with a closed case 20 supplied with an air flow with an adequate head, normally generated by a fan or by an air generator (known and not shown), through at least one supply duct 21. The closed case 20 is also provided (in the solution shown in figure 4 with at least one further duct 22 (which will be fully described below). The closed case 20 is located under the support plane 9 and is integral to it. The nozzles (UG) are pneumatically connected to the closed case 20.

Optionally, the pre-existence of the closed case 20 can be exploited and the plurality of nozzles (UG) can be used for obtaining of a first pneumatic apparatus 30. In order to do this, the duct 22 simply needs to be connected to a special vacuum generator (not shown) in order to perform the "pneumatic vacuum holding" action by closing the duct 21 accordingly. The vacuum thus propagates to all the nozzles (UG) of the case 20.

The ducts 21 and 22 are provided with valves (not shown) that permit a switch from the "air cushion" mode, in which air flows out of the case 20, to the "pneumatic vacuum holding" mode, in which air flows into the case 20, and vice versa.

For example, if one wants to switch to the "pneumatic vacuum holding" mode, a dedicated valve (not shown) closes the duct 21, causing the duct 22 and the plurality of nozzles (UG) to generate a suction.

Alternatively, one single duct 21 leading to the case 20 can be provided, wherein the separation of the flows with the relative valves takes place downstream of and close to the air and vacuum generator.

In a further alternative, one single duct 21 can be provided using a suitable reversible fan or air generator, namely capable, by means of opposite rotations, of generating both the out-flowing air flow to create the air cushion and at the in-flowing air flow to create a suction and, hence, a pneumatic vacuum in the case 20.

This pneumatic vacuum is used to lock the lower surface of the panel (P) (or of the strip (STR)) while waiting for a subsequent movement or processing and, hence, ultimately, to hold the entire panel (P) or part of it resting on the relative zone of the work area (AL) above the case 20.

In order to increase the flexibility of the system, it is optionally possible to divide the support plane 9 into a plurality of pneumatic devices (SET), (SET1), (SET2), (SET3), (SET4), (SET5), (SET6) (figures 1, 3, 4, 7, 8, 9, 10) pneumatically sealed with respect to each other and each having a respective closed case 20, 20A, 20B, 20C, 20D, 20E, 20F, with which respective ducts of the type 21 and 22 are associated.

Basically, this first pneumatic apparatus 30 comprises at least one pneumatic device (SET), (SET1), (SET2), (SET3), (SET4), (SET5), (SET6) pneumatically connected to a dedicated vacuum generator (not shown).

In other words, each pneumatic device (SET), (SET1), (SET2), (SET3), (SET4), (SET5), (SET6) of the pneumatic apparatus 30 has a holding surface, which assumes the shape of a sector of the support plane 9.

It is important to highlight the fact that, since the closed cases 20, 20A, 20B, 20C, 20D, 20E, 20F are each independent of one another from the pneumatic point of view, they can each be configured to operate, selectively (or in groups), indifferently and independently of one another, as devices for creating an "air cushion" or as "pneumatic vacuum holding" devices; this depends, of course, on how each closed case 20, 20A, 20B, 20C, 20D, 20E, 20F pneumatically relates to the respective ducts of the type 21, 22.

The electronic control unit of the cutting machine 1 is configured to decide, instant by instant (selectively or in groups) which closed cases 20, 20A, 20B, 20C, 20D, 20E, 20F must operate in "air cushion" mode and which, on the other hand, in "pneumatic vacuum holding" mode according to the various operations that the cutting machine 1 must perform on the panels (P) (or on the strips (STR)) based on the cutting and/or unloading cycle in progress (see below).

The "pneumatic vacuum holding" mode is particularly useful when there is a stack of at least two panels (P) coming out of the cutting station 2.

Actually, it is possible to use the "pneumatic vacuum holding" even with stacks of several panels depending on their thickness, on their degree of porosity and also depending on the degree of holding applied, since it is possible, with modern vacuum creation systems, to vary their power level by means of electronic signals.

In this case, the lower panel (P) of the stack of panels (P) is kept locked by the pneumatic apparatus 30, while the upper panel (P) of the same stack of panels (P) is picked up and moved by the robotic manipulator 10, which, in the meantime, in masked time, namely while the lower panel (P) is locked, basically substantially simultaneously, has laid and operated its suction cups 10D on the upper surface of the panel (P) located in the highest point of the stack.

In this way, it is ensured that the two panels (P), originally on top of one another in the same stack, following the aforementioned operations are completely detached from one another in a fast and reliable manner, thus solving the problems that would be caused by the unwanted adhesion between the panels (P). All of this with the purpose of obtaining a more precise and faster handling of the two panels (P) originally stacked on top of one another, without lifting and consequent unwanted displacements of the panels (P) located at the bottom, which have to wait and are not affected by the pick-up of the robotic manipulator 10.

The choice of the pneumatic devices (SET), (SET1), (SET2), (SET3), (SET4), (SET5), (SET6) of the pneumatic apparatus 30 to be activated in "air cushion" mode or in "pneumatic vacuum holding" mode is (selectively or in groups) made by the electronic control unit (not shown) of the cutting machine 1 according to their position on the work area (AL) and/or according to the instantaneous position that the panel (P) or the strip (STR) to be held and/or handled occupies on the work area (AL) during the cutting cycle and, optionally, also according to the dimensions of the panel (P) or of the strip (STR) to be held and/or handled.

It should be pointed out that the electronic control unit is configured to manage and store, instant by instant, all the operating and waiting phases of the panels being processed on the work area (AL) and, therefore, the dimensions of each single panel (P) or pack of panels (P), their exact position on the work area (AL) and, hence, also the phase or phases to which each single panel (P) or stack of panels (P) must be subjected in the relative cutting and/or processing cycle are known instant by instant.

Special sensors can make up for the detection of the data mentioned above, in the event that the electronic control unit is not able to automatically store it during the processing cycle.

For example, the electronic control unit can be set to activate the "air cushion" mode in those zones of the work area (AL) involved in the movement of the panels (P) and/or of the strips (STR) during their normal cutting cycle, while it is possible to simultaneously activate the "pneumatic vacuum holding" mode in other zones of the same work area (AL) where, on the other hand, the panels (P) and/or the strips (STR) are waiting and, therefore, are not involved in any movement and/or processing. It should be noted that these free-sliding and locking areas or zones could change continuously with the variation of the cutting cycle and, within the same cutting cycle, with the variation of the position that the various panels (P) assume during the cycle on the work area (AL).

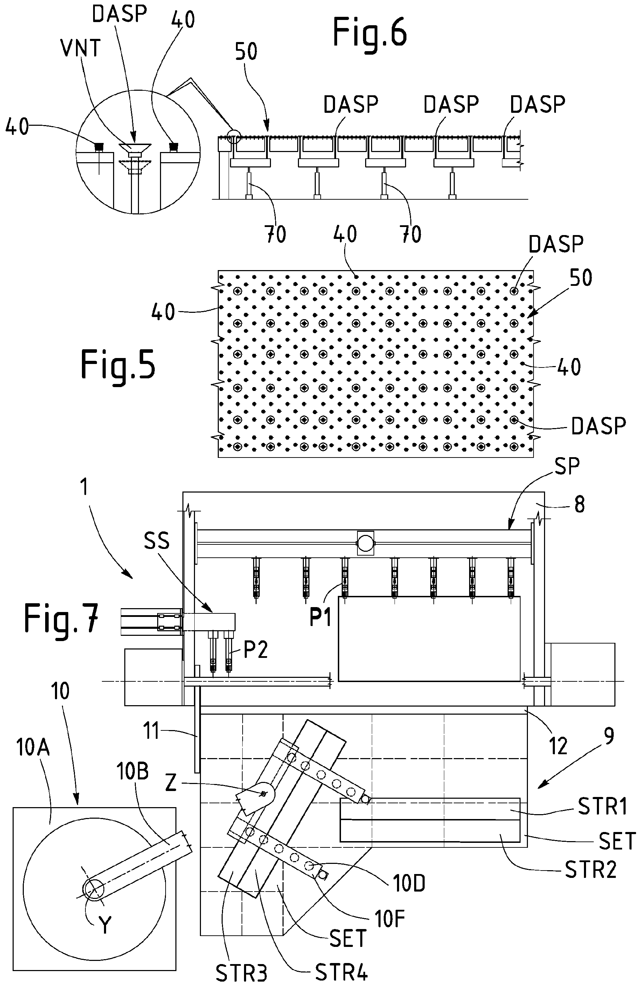

Figures 5, 6 show a second solution that is alternative or, possibly, even complementary to that of figures 3 and 4, a solution that uses the "pneumatic vacuum holding" mode on a different type of support plane 9.

The solution of figures 5 and 6 can be adopted, for example, when the support plane 9 is a "support brush plane" or, in any case, a plane consisting of a surface with a low coefficient of friction without the air cushion.

The "support brush plane" is defined as a plane provided with a plurality of support brushes 40, which are provided with sufficiently rigid bristles, such as not to deflect too much under the action of the weight of the panels (P) in passing by, and are specifically designed to avoid, as far as possible, marks and/or scratches on the panels.

The work area (AL) and, in particular, the support plane 9, in addition to having the support brushes 40 or another type of surface that permits an easy and free sliding of the panels (P) and/or of the strips (STR), is provided with a second pneumatic apparatus 50 comprising a plurality of pneumatic devices (DASP) (figure 6) configured to be selectively activated, individually and/or in groups, according to the position of the panels (P) and/or of the strips (STR) to be held, as they are not momentarily involved in any movement and/or processing and, optionally, also according to their size.

Each pneumatic device (DASP) (figure 6) is vertically movable and/or configured to adhere in any way to the lower surface of the panels (P) to be held. Each pneumatic device (DASP) can possibly be associated with a movable equipment, which is movable from a first configuration, in which the pneumatic device (DASP) is retracted with respect to the surface of the work area (AL), and a configuration, in which the pneumatic device (DASP) is lifted with respect to the initial position of its first configuration and can come into contact with the lower surface of the panel above it.

In particular, each pneumatic device (DASP) (figure 6), in addition to being possibly provided with respective lifting and lowering means 70 (figure 6) in order to be moved towards or away from (in hatching in the enlargement of figure 6) the lower surface of the panels (P), can be pneumatically coupled to a special vacuum generator (not shown).

Said a vacuum generating device (not shown) creates a vacuum inside each suction cup (VNT) (advantageously made of a flexible and deformable rubber) associated with each pneumatic device (DASP).

It should be noted here that, instead of classic suction cups, new suction systems, commonly called "suction blocks", can also be used, consisting of a unit or "block" provided - on its upper surface - with nozzles, which are connected to a vacuum generator and through which the physical holding of the overlying material takes place.

In some cases, these suction blocks can be equipped with a valve or even with a surface sensor configured to determine the activation of the vacuum holding phase upon detection of the passage or of the presence of material or by means of a command jointly given by the electronic control unit. Therefore, said suction blocks or other similar pneumatic holding systems can be compared, in this context, with a suction cup system such as the one described and shown in figures 5 and 6.

The selective lifting of the suction cups (VNT) (or, anyway, the activation of the suction blocks or of other similar systems) and the subsequent creation of the vacuum inside the suction cups (VNT) is responsible for the pneumatic grip that the pneumatic devices (DASP) exert upon the lower surface of the panel (P) and/or of the strip (STR) resting on the relative plane.

Each pneumatic device (DASP) basically has the same function as the nozzles (UG) described in the embodiment of figures 3, 4, when these nozzles (UG) operate in the aforementioned "pneumatic vacuum holding" mode.

The number and position of the pneumatic devices (DASP) that must be lifted and operated are chosen, selectively or in groups, according to the instantaneous position that the panel (P) or the strip (STR) to be held occupies on the work area (AL), in particular on the support plane 9, and, optionally, also according to its dimensions.

The "pneumatic vacuum holding mode" of the pneumatic devices (DASP) can be deactivated also in this case, thus enabling a total freedom of sliding in those zones of the work area (AL) involved in the movement of the panels (P) and/or of the strips (STR) during their normal cutting cycle made possible by the specific type of cutting machine 1, while it is possible to simultaneously activate the "pneumatic vacuum holding" mode through the activation of the pneumatic devices (DASP) available and distributed on the same work area (AL) where, on the other hand, the panels (P) or the packs of panels (P) and/or the strips (STR) or the stacks of strips (STR) are waiting and, hence, are not involved in any movement and/or processing.

Continuing with the comparison between the two preferred embodiments of figures 3 and 4 on one side and of figures 5 and 6 on the other side, it can be said that the support brushes 40 (figures 5, 6) have the same function of free sliding and support of the panels (P) to be moved as the one carried out by the air cushion plane. In both preferred embodiments, the panels (P) that must not be moved can be held on the relative support planes by means of the respective first pneumatic apparatuses 30 and second pneumatic apparatuses 50, respectively, as described above, while those that must be moved, instead, are free to do so without any impediment.

Basically, in both solutions, thanks to the pneumatic apparatuses 30, 50, the choice of the pneumatic devices (SET), (SET1), (SET2), (SET3), (SET4), (SET5), (SET6) (DASP) to be activated selectively or in groups in "pneumatic vacuum holding" mode or to be activated in order to enable a free sliding mode is made by the electronic control unit of the cutting machine 1 according to their position on the work area (AL), according to the dimensions of the panel (P) or of the strip (STR) to be held and/or handled and/or according to the instantaneous position that the panel (P) or the strip (STR) occupies on the work area (AL).

For clarity of description, it should be added that, as shown in figures 7, 8, 9, 10, the strips (STR) rotated by the robotic manipulator 10 are caused to strike against the reference square 11 and are immediately retrieved by the secondary pushing device (SS) by means of the second plurality of grippers (P2), they are completely retracted on the feeding plane 8 (according to arrow (F2)) and then they are advanced again in the opposite direction (again according to arrow (F2)), so that the assembly group (GRT) can make the transverse cuts by means of the cutting blade 4.

Figure 7 shows two strips (STR1) (STR2) (on the right of the drawing) parked at one end of the support plane 9, which are held by the action of "pneumatic vacuum holding" carried out by means of the relative first pneumatic apparatus 30 (and/or second pneumatic apparatus 50) below, and two identical strips (STR3) (STR4) (on the left of the drawing) (originally on top of the previous strips (STR1) (STR2) and cut simultaneously with them by means of the cutting station 2) during their movement from the parking zone (on the right of the drawing) to the transverse zone (on the left of the drawing) of the cutting machine 1, a movement carried out by means of the aforementioned robotic manipulator 10.

In particular, it should be noted that, precisely during the lifting of these two strips (STR3) (STR4) by means of the pick-up unit 10C of the robotic manipulator 10 using the movable arms 10F and the relative suction cups 10D, it is necessary to hold the two strips (STR1) (STR2) remaining on the support plane 9 so that they are not also lifted and/or moved due to the adhesion effect between the relative contact surfaces.

It is precisely at this stage that the "pneumatic vacuum holding" action of the pneumatic apparatus 30 carried out by means of at least one pneumatic device (SET), (SET1), (SET2), (SET3), (SET4), (SET5), (SET6) (and/or, if necessary, carried out with a pneumatic apparatus 50) produces its effect of holding the sole lower strips (STR1) (STR2) lying on the support table. As a matter of fact, during this phase of holding the strips (STR1) (STR2), other zones of the same work area (AL) can be in "air cushion" mode or, in any case, in a free sliding mode to allow other panels (P) and/or strips (STR) to be moved during their simultaneous moving and/or processing cycle.

The two strips (STR3) (STR4), which were originally stacked on top of the strips (STR1) (STR2), respectively, in the parking area, are then quickly transferred, by means of the robotic manipulator 10, to the area of the cutting machine 1 used for transverse cuts (on the left of the drawing) and, in particular, are caused to strike against the reference square 11 and against the grippers (P2) of the secondary pushing device (SS).

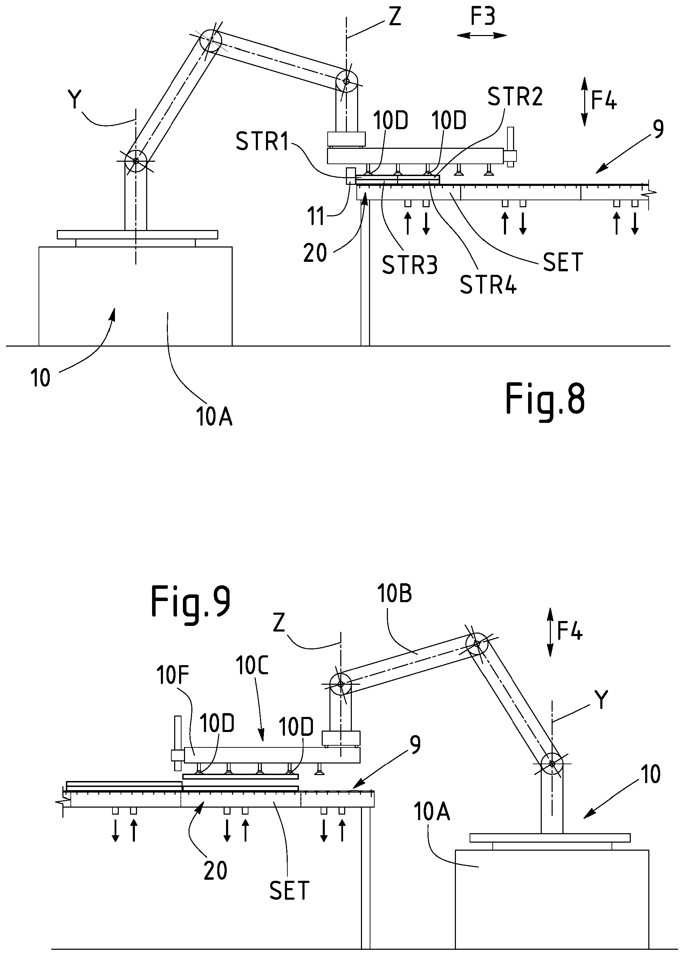

Figure 8 shows the subsequent positioning of the remaining two strips (STR1) (STR2) against the reference square 11 by means of the robotic manipulator 10. The strips (STR1) (STR2) are duly released during the relative lifting, thus interrupting the "pneumatic vacuum holding" action and restoring, if necessary, the "air cushion" in the closed cases 20, 20A, 20B, 20C, 20D, 20E, 20F below.

Obviously, the same result would be obtained if, instead of or in collaboration with a first pneumatic apparatus 30, a second pneumatic apparatus 50 were used, whose choice is made based on the different construction criteria chosen for the cutting machine and for the different types of panels to be processed.

As shown in figure 8, again, the strip (STR1) is stacked on the relative strip (STR3), while the strip (STR2) is stacked on top of the respective strip (STR4).

A sort of reversal of the stacking order of the strips (STR1), (STR2) and (STR3), (STR4) has been achieved.

As a matter of fact, while at the beginning the strip (STR3) is stacked on the underlying strip (STR1) and the strip (STR4) is stacked on the underlying strip (STR2) (figure 7), at the end of the aforementioned movements the strip (STR1) is stacked on the underlying strip (STR3), while the strip (STR2) is stacked on the underlying strip (STR4) (figure 8).

The two strips (STR3) (STR4), which were previously positioned against the reference square 11, can also, if necessary, be held by means of the "pneumatic vacuum holding" action carried out, for example, by means of the pneumatic devices (SET), (SET1), (SET2), (SET3), (SET4), (SET5), (SET6) below, in order to prevent them from involuntary moving in an uncontrolled manner while the two subsequent strips (STR1) (STR2) are being placed on top of them (figure 8).

Obviously, the same result would be obtained if, instead of or in collaboration with a first pneumatic apparatus 30 (first embodiment), a second pneumatic apparatus 50 (second embodiment) were used.

Figure 10 shows how the strips (STR1), (STR2), (STR3), (STR4), which were just rotated and placed on top of one another against the reference square 11, are being cut transversely in order to produce relative panels (P) cut to size. During this phase, the relative planes below are in "air cushion" mode or, anyway, in free sliding mode.

During the transverse cutting phase, since the position and sizes of each single cut panel (P) along the support plane 9 is known, the robotic manipulator 10, using the relative arms 10C and the relative properly positioned suction cups 10D, unloads them outside the cutting machine 1, onto the relative pallets (PPL) (figure 10), which were previously prepared, and/or onto roller tracks (not shown).

Figure 10 further shows a pair of strips (STR5) and a strip (STR7) lying on top of a pair of strips (STR6) and on top of a strip (STR8), respectively, waiting to be transferred to the area of the transverse cuts (on the left of the drawing). Even in this case, the zones of the work area (AL) involved in the cutting and in the relative handling of the strips (STR5) (STR6) (STR7) (STR8) up to their waiting zone are activated in "air cushion" mode or, anyway, in free sliding mode. During this wait, the pair of strips (STR6) and the strip (STR8) resting on the support plane 9 can be temporarily held, by means of the "pneumatic vacuum holding" action carried out in the manner described above, on the relative portion of the work area (AL), thus avoiding any accidental movement thereof.

As a matter of fact, an accidental movement would be very problematic for the continuation of the cutting cycle and, in particular, for the subsequent picking up, by the robotic manipulator 10, of the panels (P) and/or the strips (STR) to be picked up in a position different from the predetermined one.

Figure 9 shows the picking up (lifting) of the upper panels (P) of the stack (of two panels (P)), while those directly below are firmly locked by means of the "pneumatic vacuum holding" action, which is properly and temporarily activated in the manner described above.

Although the two embodiments of the invention have been described separately (with reference to figures 3, 4, on the one hand (constituting a first embodiment), and with reference to figures 5, 6, on the other hand (constituting a second embodiment)), it is clear that, without departing from the scope of protection of the invention, a first portion of the work area (AL) can be equipped with the pneumatic devices (SET), (SET1), (SET2), (SET3), (SET4), (SET5), (SET6) (pneumatic apparatus 30) described in relation to the first embodiment (figures 3, 4), while a second portion of the work area (AL) can entail the use of pneumatic devices (DASP) of the second embodiment (pneumatic apparatus 50) (figures 6, 7). It could be possible, also, that the single zones of the work area (AL) entail the use of the pneumatic apparatus 30 and of the pneumatic apparatus 50.

In addition, a portion of the work area (AL) can be provided with air cushion planes and, next to the latter, pneumatic devices (DASP) are also provided. This solution is very advantageous also for those existing machines where the implementation of new air cushion planes complete with the pneumatic devices (SET), (SET1), (SET2), (SET3), (SET4), (SET5), (SET6) is complex.

It should be noted here that, if necessary, the panels (P) (or the strips (STR)) that require a further transverse cutting operation, in addition to the one already carried out, can also be parked in any free zone of the work area (AL) in order to be then retrieved and re-inserted in a new cutting cycle. Even in this case, in the area immediately below the temporary parking zone of the panel (P) to be cut, the "pneumatic vacuum holding" action could be activated so as to avoid uncontrolled movements thereof.

As a matter of fact, the "pneumatic vacuum holding" action can be activated, when necessary, in any zone of the work area (AL) of the cutting machine 1 where the possibility of implementing it is provided.

In particular, in some cutting machines to simplify the pneumatic apparatus 30 or the pneumatic apparatus 50, the entire zone of feeding plane 8, or of the base work plane 5 or of the support plane 9 downstream of the cutting station 2 can optionally be equipped with one single pneumatic apparatus 30 or 50 or by a simplified combination of the two apparatuses 30 and 50 activated simultaneously in "pneumatic vacuum holding" mode when necessary.

Therefore, to sum up, the electronic control unit is configured to manage and control the cutting machine 1 in each working phase of its and, therefore, the action of cutting, advancing, picking up and/or parking and/or unloading, free sliding and/or holding the panels (P), the strips (STR) or the cut panels (P) is carried out dynamically and instantaneously by the same electronic control unit that controls and manages each single component thereof. In particular, the positions of all the fixed and moving parts in each single phase of the processing cycle are therefore known by the electronic control unit (or by several units connected to it) and, hence, the positions of each single panel (P) on the work area (AL) during the relative cutting, handling and/or unloading cycle are also known.

The electronic control unit is then configured to define the position of the pneumatic apparatus 30 and/or 50 installed on the work area (AL), to acquire and/or to determine the position of the panels (P) or of the stacks of panels (P) to be moved or to be locked on the work area (AL) and optionally to acquire and/or to determine also the dimension of the panels (P) or of the stacks of panels (P) to be locked in position on work area (AL) in order to make a selection of the individual pneumatic devices of the pneumatic apparatus 30 and/or 50 to be activated in "pneumatic vacuum holding mode" when permitted by its configuration.

It should also be noted here that the solution suggested herein can also be used in any cutting machine 1 of the type described above, hence with relative moving apparatuses for moving the panels (P) along the work area (AL) (pushing devices (SP, SS) and/or translating devices, rotary tables, manipulators etc. hereinafter defined as second moving members (MMP) and not illustrated), but with operation without the aid of the described robotic manipulator 10 or with the use of a different manipulator 10, for example, with suction cup means and/or movable gripping side poles to transfer the panels (P) and/or the stacks of panels (P) by gripping and sliding them through the work area (AL) and in particular over the support plane (9). Indeed, during the various cutting cycles, at least first and second panels (P) (and/or at least first and second stacks of panels (P)) can be positioned and will then be picked up and moved by the various handling devices. As a result of the need to use very low friction support and/or sliding planes (if not without friction, as is the case with air cushion planes), there is a real danger of an accidental and uncontrolled movement of the panels (P) and/or of the stacks of panels (P) during the various parking and waiting phases of the cutting and/or unloading cycle.

By applying, in specific zones of the work area (AL), the pneumatic solution 30 or 50 or the combination of the two solutions 30 and 50 provided by this description, depending on the type and/or on the construction of the various work planes of the cutting machine 1, the general reliability of the machine is significantly increased, since the "virtual" positions of the panels (P) or of the stacks of panels (P) waiting to be picked up by the various moving members (first moving members (SP, SS), and/or second moving members (MMP)) during their cutting cycle correspond exactly to the real ones precisely thanks to their selective and temporary holding in position, namely, when necessary, by means of the aforementioned "pneumatic vacuum holding" action, which, in any case, simultaneously leaves the possibility of free movement of other panels (P) and/or other stacks of panels (P) in other zones of the same work area (AL) during the relative cutting cycles in automatic succession.

According to what described, the invention also relates to a method for locking in position, on work area (AL) of at least a panel (P) or at least a pack of panels (P) while, substantially simultaneously, is permitted the movement, on the work area (AL), of an at least second panel (P) or of at an least second stack of panels (P) during the working process of flat shaped panels (P) in a cutting machine (1) of the type comprising: at least one cutting station (2) comprising, in turn, at least one processing tool for processing panels (P) or stacks of panels (P); a pushing device (SP; SS) and at least a second pushing device (SP; SS) or a pushing device (SP; SS) and at least a second moving member (MMP; 10) for said panels (P) or said stacks of panels (P); a work area (AL) being defined by a feeding plane (8), by a base work plane (5) and by a support plane (9) for supporting said panels (P) and/or said stacks of panels (P) comprising pneumatic holding means of the type chosen between first pneumatic means (30) and/or second pneumatic means (50) configured to generate a "pneumatic vacuum holding" on the lower surface of at least one panel (P) or of a bottom panel (P) of at least one stack of panels (P) being processed on the work area (AL); the method comprises the following steps carried out in any order:
(f1) defining, in the electronic control unit of the cutting machine, the position of first pneumatic means (30) and/or second pneumatic means (50) available in the work area (AL);
(f2) acquiring or determining the position of an at least one first panel (P) or of an at least one first stack of panels (P) to be locked in position on the work area (AL) while waiting for a following movement, cut or discharge during their relative cutting cycle;
(f3) acquiring or determining the position of an at least one second panel (P) or of an at least one second stack of panels (P) in the work area (AL) during their relative cutting cycle;
(f4) locking in position on the work area (AL) said at least one first panel (P) or a bottom panel of said at least one first stack of panels (P) by activating said first pneumatic means (30) and/or second pneumatic means (50) in "pneumatic vacuum holding" mode;
(f5) moving, in masked time by means of a pushing means (SP; SS) or by means of second moving means (MMP; 10) during the preceding step (f4), said at least one second panel (P) or said at least one second stack of panels (P);
(f6) releasing said at least one first panel (P) or said bottom panel (P) of said at least one first stack of panels (P) by deactivating said first pneumatic means (30) and/or second pneumatic means (50) restoring the preceding mobility mode of the underlying work area (AL);
(f7) moving said at least one first panel (P) or said at least one first stack of panels (P).

The method also relates, in case of panels manipulation carried out by a robotic manipulator (10) provided with pick-up means (10C), subsequent steps for picking up and moving an upper panel (P) of at least one stack of panels (P) while, substantially simultaneously, the bottom panel (P) of the same stack of panels (P) is being locked in position, on the work area (AL), by means of the activation of said first and/or second pneumatic means (30, 50) in a "pneumatic vacuum holding" mode; the method further comprises the following steps executed in any order:
(f7) acquiring or determining the position of an at least one stack of panels (P) to be locked in position on the work area (AL) while waiting for a following movement, cut or unloading;
(f8) locking at least a bottom panel (P) of said at least one stack of panels (P) by means of said first and/or second pneumatic means (30; 50) in said "pneumatic vacuum holding" mode; and
(f9) executing, substantially simultaneously with the preceding step (f8), in masked time relative to the same step (f8), by means of a robotic manipulator (10), the pick-up and lifting of the upper panel (P) of said same at least one stack of panels (P) in order to move it to a different zone of said work area (AL) or to unload it onto expelling means (PPL) outside of the work area (AL).

The advantage offered by this innovative solution is represented, first of all, by the significant increase in productivity, since, in cutting machines assisted by a robotic manipulator, the cutting of at least two panels for each cutting cycle is guaranteed in a fast and totally reliable way.

As a matter of fact, returning to the statistics discussed in the study on productions described in the prior art of this description, in forty-eight percent of the typical productions (relating to cycles with two panels (P) and four panels (P) per cutting scheme) productivity has practically doubled, while in a further fourteen percent of the typical production (relating to cycles with three panels per cutting scheme) productivity has increased by sixty-six percent, but, depending on the porosity of the panels and depending on the degree of holding applied, it could also be tripled.

Furthermore, the extreme cost-effectiveness of this solution in relation to the increase in productivity and reliability must also be noted here.

As a matter of fact, thanks to the extreme reliability of the solution suggested herein, the various machine stops due to problems with the accidental and uncontrolled displacement of the panels (P) and/or of the strips (STR) on the work area (AL) of the machine 1 are no longer present, as the problems generated by these displacements are no longer present.
The fact that, in this invention, the action of pneumatically holding at least one panel (P) or at least one bottom panel (P) of a stack of panels (P) on the work area (AL) and the action of picking up and lifting at least one upper panel (P) of the same stack of panels (P) by means of a robotic manipulator 10 or the movement of a second panel (P) or of a second pack of panels (P) by means of moving means (SP, SS, MMP) take place substantially simultaneously, basically in masked time, represents a significant progress from the point of view of an effective, reliable and economic management of the cutting machine 1.

## Claims

1. A cutting machine (1) for cutting panels (P) made of wood, polymers, composite materials, fibre-cement or the like, the machine comprising a base (3); a cutting station (2); at least one pushing device (SP, SS) configured to move at least one panel (P) or at least one stack of panels (P) through said cutting station (2) according to a first direction (F2) substantially orthogonal with respect to said cutting station (2); a cutting assembly (GRT) mounted in said cutting station (2) and movable in a second direction (F1) along a cutting line (LT) substantially perpendicular to the first direction (F2) so as to cut said at least one panel (P) or said at least one stack of panels (P); a work area (AL) configured to support and move panels (P) or stacks of panels (P); said work area (AL) being defined by a feeding plane (8), by a base work plane (5) and by a support plane (9); and an electronic control unit configured for the management and the control of all the members of the cutting machine (1); the cutting machine (1) being **characterized in that** said work area (AL) comprises pneumatic means of the type chosen between first pneumatic means (30) and/or second pneumatic means (50) configured to subject at least a first panel (P) or a bottom panel (P) of an at least first stack of panels (P) to a "pneumatic vacuum holding" operating mode for temporary locking said at least first panel (P) or said bottom panel (P) of said at least first stack of panels (P) in position on said work area (AL), while waiting for a following phase chosen between moving, cutting or unloading; a pushing device (SP; SS) and at least a second pushing device (SP; SS) or a pushing device (SP, SS) and at least a second moving mean (MMP; 10), configured to move at least a second panel (P) or at least a second stack of panels (P) substantially simultaneously, and therefore in masked time, with said temporary locking of said at least first panel (P) or of said bottom panel (P) of said at least first stack of panels (P); **and in that** the electronic control unit is configured to define the position of said first pneumatic means (30) and/or of said second pneumatic means (50) available on work area (AL), to acquire and/or to determine the position of said at least first panel (P) or of said bottom panel (P) of said at least first stack of panels (P) to be locked in position on work area (AL) and to acquire and/or determine the position of said at least a second panel (P) or at least a second stack of panels (P) to be moved on the work area (AL).

2. The cutting machine (1) according to claim 1, **characterized in that** the electronic control unit is further configured to acquire and/or to determine the dimensions of said at least first panel (P) or of said bottom panel (P) of said at least first stack of panels (P) to be locked in position on work area (AL).

3. The cutting machine (1) according to claim 1 or to claim 2, **characterized in that** the electronic control unit comprises at least one command unit to select the air flow direction to said pneumatic means (30) configured to activate said pneumatic means (30) in a "pneumatic vacuum holding" mode where the aspiration air flow is going into the pneumatic means (30) or to activate said pneumatic means (30) in an "air cushion mode" where the air flow is coming out of the pneumatic means (30).

4. The cutting machine (1) according to claim 3, **characterized in that** said first pneumatic means (30) comprise at least one pneumatic device ((SET), (SET1), (SET2), (SET3), (SET4), (SET5), (SET6)); said at least one pneumatic device ((SET), (SET1), (SET2), (SET3), (SET4), (SET5), (SET6)) comprising relative sealing means configured to separate it from the other pneumatic devices ((SET), (SET1), (SET2), (SET3), (SET4), (SET5), (SET6)).

5. The cutting machine (1) according to claim 4, **characterized in that** the electronic control unit comprises at least one command unit to select the air flow direction to said at least one pneumatic device ((SET), (SET1), (SET2), (SET3), (SET4), (SET5), (SET6)) configured for the selective activation of one or more pneumatic devices ((SET), (SET1), (SET2), (SET3), (SET4), (SET5), (SET6)) in "pneumatic vacuum holding" mode and one or more pneumatic devices ((SET), (SET1), (SET2), (SET3), (SET4), (SET5), (SET6)) in "air cushion" mode.

6. The cutting machine (1) according to claim 1 or to claim 2, **characterized in that** said second pneumatic devices (50) comprise at least one pneumatic device (DASP) provided with suction cup means (VNT) configured to adhere to the lower surface of panels (P) supported on work area (AL).

7. The cutting machine (1) according to claim 6, **characterized in that** said at least one pneumatic device (DASP) is liftable.

8. The cutting machine (1) according to any claim 6 or 7, **characterized in that** the electronic control unit is configured to selectively activate said at least one pneumatic device (DASP) in "pneumatic vacuum holding" mode on its own or in combination with other pneumatic devices (DASP).

9. The cutting machine (1), according to any claim from 3 to 5 and to any claim from 6 to 8 **characterized in that** said work area (AL) entails the use of said first pneumatic means (30) and of said second pneumatic means (50).

10. The cutting machine (1) according to any one of the preceding claims, **characterized in that** the choice of said pneumatic means of the type chosen between first pneumatic means (30) and/or second pneumatic means (50) to be activated in "pneumatic vacuum holding" mode is made by the electronic system of the cutting machine (1) based on the position of said pneumatic means of the type chosen between first pneumatic means (30) and/or second pneumatic means (50) in the work area (AL) and/or on the dimensions of said at least one panel (P) and/or said at least one bottom panel (P) of said at least one stack of panels (P) to be held and/or based on the instantaneous position occupied by said at least one panel (P) and/or said at least one bottom panel (P) of said at least one stack of panels (P) in said work area (AL).

11. The cutting machine (1) according to any one of the preceding claims, **characterized in that** it further comprises at least one robotic manipulator (10) comprising, in turn, pick-up means (10C); said at least one robotic manipulator (10) configured to pick-up and move at least one panel (P) coming in or out of said cutting station (2) and/or to unload said at least one panel (P) out of the work area (AL).

12. The cutting machine (1) according to claim 11, **characterized in that** the electronic control unit is configured to lock in position on said work area (AL) a bottom panel (P) of an at least one stack of panels (P) by means of the activation of said first pneumatic means (30) and/or of said second pneumatic means (50) in a "pneumatic vacuum holding" operating mode while an upper panel of the same at least one stack of panels (P) is being picked-up and lifted by said at least one robotic manipulator (10).

13. A method for locking in position, on work area (AL) of at least a panel (P) or at least a pack of panels (P) while, substantially simultaneously, is permitted the movement, on the work area (AL), of an at least second panel (P) or of at an least second stack of panels (P) during the working process of flat shaped panels (P) in a cutting machine **characterized by** providing a cutting machine according to any of claim 1-12, wherein the cutting machine comprises: at
least one cutting station (2) comprising, in turn, at least one processing tool for processing panels (P) or stacks of panels (P); a pushing device (SP; SS) and at least a second pushing device (SP; SS) or a pushing device (SP; SS) and at least a second moving mean (MMP; 10) for said panels (P) or said stacks of panels (P); a work area (AL) for supporting said panels (P) and/or said stacks of panels (P) comprising pneumatic holding means of the type chosen between first pneumatic means (30) and/or second pneumatic means (50) configured to generate a "pneumatic vacuum holding" on the lower surface of at least one panel (P) or of a bottom panel (P) of at least one stack of panels (P) being processed on the work area (AL); **and in that** it comprises the following steps carried out in any order:
(f1) defining, in the electronic control unit of the cutting machine, the position of first pneumatic means (30) and/or second pneumatic means (50) available in the work area (AL);
(f2) acquiring or determining the position of an at least one first panel (P) or of an at least one first stack of panels (P) to be locked in position on the work area (AL) while waiting for a following movement, cut or discharge during their relative cutting cycle;
(f3) acquiring or determining the position of an at least one second panel (P) or of an at least one second stack of panels (P) in the work area (AL) during their relative cutting cycle;
(f4) locking in position on the work area (AL) said at least one first panel (P) or a bottom panel of said at least one first stack of panels (P) by activating said first pneumatic means (30) and/or second pneumatic means (50) in "pneumatic vacuum holding" mode;
(f5) moving, in masked time by means of pushing means (SP, SS) or second moving means (MMP; 10) during the preceding step (f4), said at least one second panel (P) or said at least one second stack of panels (P);
(f6) releasing said at least one first panel (P) or said bottom panel (P) of said at least one first stack of panels (P) by deactivating said first pneumatic means (30) and/or second pneumatic means (50) restoring the preceding mobility mode of the underlying work area (AL);
(f7) moving said at least one first panel (P) or said at least one first stack of panels (P).

## Patentansprüche

1. Schneidemaschine (1) zum Schneiden von Platten (P) aus Holz, Polymeren, Verbundwerkstoffen, Faserzement oder dergleichen, wobei die Maschine umfasst: ein Maschinenuntergestell (3); eine Schneidstation (2); mindestens einen Schieber (SP; SS), der dazu eingerichtet ist, mindestens eine Platte (P) oder mindestens einen Stapel von Platten (P) durch die Schneidstation (2) in einer ersten Richtung (F2), die im Wesentlichen orthogonal zu der Schneidstation (2) verläuft, zu bewegen; eine Schneideinheit (GRT), die in der Schneidstation (2) montiert und eine zweite Richtung (F1) entlang einer Schnittlinie (LT), die im Wesentlichen senkrecht zur ersten Richtung (F2) verläuft, beweglich ist, um das Schneiden der mindestens einen Platte (P) oder des mindestens einen Stapels von Platten (P) durchzuführen; einen Arbeitsbereich (AL), der für die Unterstützung und die Bewegung von Platten (P) oder von Stapeln von Platten (P) eingerichtet ist; wobei der Arbeitsbereich (AL) durch die Gesamtheit aus einer Zuführebene (8), einer Grundarbeitsebene (5) und einer Stützebene (9) definiert ist; eine elektronische Steuereinheit, die zur Verwaltung und Steuerung sämtlicher Komponenten der Schneidemaschine (1) eingerichtet ist; wobei die Schneidemaschine (1) **dadurch gekennzeichnet ist, dass** der Arbeitsbereich (AL) pneumatische Mittel umfasst, die aus ersten pneumatischen Mitteln (30) und/oder zweiten pneumatischen Mitteln (50) ausgewählt sind und die dazu eingerichtet sind, einen "pneumatischen Vakuumhalt" an mindestens einer ersten Platte (P) oder an einer unteren Platte mindestens eines ersten Stapels von Platten (P) zu erzeugen, um die mindestens eine erste Platte (P) bzw. die untere Platte des mindestens einen ersten Stapels von Platten (P) vorübergehend in Position auf dem Arbeitsbereich (AL) zu fixieren in Erwartung einer nachfolgenden Operation, ausgewählt aus Bewegen, Schneiden oder Abführen; einen Schieber (SP; SS) und mindestens einen zweiten Schieber (SP; SS) oder einen Schieber (SP; SS) und mindestens ein zweites Bewegungselement (MMP; 10), die dazu eingerichtet sind, mindestens eine zweite Platte (P) oder mindestens einen zweiten Stapel von Platten (P) im Wesentlichen gleichzeitig, daher in maskierter Zeit, während der genannten vorübergehenden Fixierung der mindestens einen ersten Platte (P) oder der unteren Platte des mindestens einen ersten Stapels von Platten (P), zu bewegen; **und dadurch, dass** die elektronische Steuereinheit dazu eingerichtet ist, die Position der verfügbaren ersten pneumatischen Mittel (30) und/oder zweiten pneumatischen Mittel (50) auf dem Arbeitsbereich (AL) festzulegen, die Position der mindestens einen ersten Platte (P) oder der unteren Platte des mindestens einen ersten Stapels von Platten (P), die auf dem Arbeitsbereich (AL) in Position zu fixieren sind, zu erfassen und/oder zu bestimmen, sowie die Position der mindestens einen zweiten Platte (P) oder des mindestens zweiten Stapels von Platten (P), die auf dem Arbeitsbereich (AL) zu bewegen sind, zu erfassen und/oder zu bestimmen.

2. Schneidemaschine (1) nach Anspruch 1, **dadurch gekennzeichnet, dass** die elektronische Steuereinheit ferner dazu eingerichtet ist, die Abmessungen der mindestens einen ersten Platte (P) oder der unteren Platte des mindestens einen ersten Stapels von Platten (P), die auf dem Arbeitsbereich (AL) in Position zu fixieren sind, zu erfassen und/oder zu bestimmen..

3. Schneidemaschine (1) nach Anspruch 1 oder Anspruch 2, **dadurch gekennzeichnet, dass** die elektronische Steuereinheit mindestens eine Ansteuerungseinrichtung umfasst, um die Strömungsrichtung der Luft zu den pneumatischen Mitteln (30) auszuwählen, wobei die Ansteuerungseinrichtung dazu eingerichtet ist, die pneumatischen Mittel (30) in einem "Vakuum-Haltemodus" zu aktivieren, in dem Luft in die pneumatischen Mittel (30) eingesaugt wird, oder die pneumatischen Mittel (30) in einem "Luftkissen-Modus" zu aktivieren, in dem Luft aus den pneumatischen Mittel (30) austritt.

4. Schneidemaschine (1) nach Anspruch 3, **dadurch gekennzeichnet, dass** die ersten pneumatischen Mittel (30) mindestens eine pneumatische Vorrichtung ((SET), (SET1), (SET2), (SET3), (SET4), (SET5), (SET6)) umfassen; wobei die mindestens eine pneumatische Vorrichtung ((SET), (SET1), (SET2), (SET3), (SET4), (SET5), (SET6)) jeweilige Dichtungsmittel umfasst, die zur Abtrennung derselben von den anderen pneumatischen Vorrichtungen ((SET), (SET1), (SET2), (SET3), (SET4), (SET5), (SET6)) eingerichtet sind.

5. Schneidemaschine (1) nach Anspruch 4, **dadurch gekennzeichnet, dass** die elektronische Steuereinheit mindestens eine Ansteuerungseinrichtung umfasst, um die Strömungsrichtung der Luft zu den pneumatischen Vorrichtungen ((SET), (SET1), (SET2), (SET3), (SET4), (SET5), (SET6)) auszuwählen, wobei die Ansteuerungseinrichtung dazu eingerichtet ist, eine oder mehrere der pneumatischen Vorrichtungen ((SET), (SET1), (SET2), (SET3), (SET4), (SET5), (SET6)) selektiv in einem "Vakuum-Haltemodus" und eine oder mehrere der pneumatischen Vorrichtungen ((SET), (SET1), (SET2), (SET3), (SET4), (SET5), (SET6)) in einem "Luftkissen-Modus" zu aktivieren.

6. Schneidemaschine (1) nach Anspruch 1 oder Anspruch 2, **dadurch gekennzeichnet, dass** die zweiten pneumatischen Mittel (50) mindestens eine pneumatische Vorrichtung (DASP) umfassen, das mit Saugnapfmitteln (VNT) versehen ist und dazu eingerichtet ist, an der Unterseite von mindestens einer auf dem Arbeitsbereich (AL) aufliegenden Platte (P) anzhaften.

7. Schneidemaschine (1) nach Anspruch 6, **dadurch gekennzeichnet, dass** die mindestens eine pneumatische Vorrichtung (DASP) anhebbar ist.

8. Schneidemaschine (1) nach einem der Ansprüche 6 oder 7, **dadurch gekennzeichnet, dass** die elektronische Steuereinheit dazu eingerichtet ist, die mindestens eine pneumatische Vorrichtung (DASP) im "Vakuum-Haltemodus" selektiv allein oder in Verbindung mit ähnlichen pneumatischen Vorrichtungen (DASP) zu betätigen.

9. Schneidemaschine (1) nach einem der Ansprüche 3 bis 5 und einem der Ansprüche 6 bis 8, **dadurch gekennzeichnet, dass** der Arbeitsbereich (AL) die ersten pneumatischen Mittel (30) und die zweiten pneumatischen Mittel (50) aufweist.

10. Schneidemaschine (1) nach einem der vorhergehenden Ansprüche, **dadurch gekennzeichnet, dass** die Wahl der pneumatischen Vorrichtungen des unter den ersten pneumatischen Mitteln (30) und/oder den zweiten pneumatischen Mitteln (50) ausgewählten Typs, die im "Vakuum-Haltemodus" aktiviert werden sollen, von der elektronischen Steuereinheit der Schneidemaschine (1) selbst getroffen wird, abhängig von der Position der pneumatischen Vorrichtungen des unter den ersten pneumatischen Mitteln (30) und/oder den zweiten pneumatischen Mitteln (50) ausgewählten Typs auf dem Arbeitsbereich (AL) und/oder von den Abmessungen der mindestens einen Platte (P) und/oder der unteren Platte des mindestens einen Stapels von Platten (P), die in Position zu fixieren sind, und/oder von der momentanen Position, die die mindestens eine Platte (P) und/oder die untere Platte des mindestens einen Stapels von Platten (P) auf dem Arbeitsbereich (AL) einnehmen.

11. Schneidemaschine (1) nach einem der vorhergehenden Ansprüche, **dadurch gekennzeichnet, dass** sie ferner mindestens einen Roboter-Manipulator (10) umfasst, der seinerseits Greifmittel (10C) umfasst; wobei der mindestens eine Roboter-Manipulator (10) dazu eingerichtet ist, mindestens eine Platte (P) an der Ein- und Ausgabeseite der Schneidstation (2) zu entnehmen und zu bewegen und/oder die mindestens eine Platte (P) außerhalb des Arbeitsbereichs (AL) abzuführen.

12. Schneidemaschine nach Anspruch 11, **dadurch gekennzeichnet, dass** die elektronische Steuereinheit dazu eingerichtet ist, eine untere Platte eines mindestens einen Stapels von Platten (P) auf dem Arbeitsbereich (AL) mittels der Aktivierung der ersten pneumatischen Mittel (30) und/oder der zweiten pneumatischen Mittel (50) im "Vakuum-Haltemodus" in Position zu fixieren, während die obere Platte desselben Stapels von Platten (P) vom Roboter-Manipulator (10) entnommen und angehoben wird.

13. Verfahren zum Fixieren von mindestens einer Platte (P) oder mindestens einem Stapel von Platten (P) in Position auf dem Arbeitsbereich (AL), während im Wesentlichen gleichzeitig die Bewegung von mindestens einer zweiten Platte (P) oder mindestens einem zweiten Stapel von Platten (P) auf dem Arbeitsbereich (AL) während des Bearbeitungsprozesses von Platten (P) mit flacher Konfiguration in einer Schneidemaschine ermöglicht wird, **dadurch gekennzeichnet, dass** eine Schneidemaschine nach einem der Ansprüche 1-12 vorgesehen ist, wobei die Schneidemaschine umfasst: mindestens eine Schneidstation (2), die ihrerseits mindestens ein Bearbeitungswerkzeug zum Bearbeiten von Platten (P) oder Stapeln von Platten (P) aufweist; einen Schieber (SP; SS) und mindestens einen zweiten Schieber (SP; SS) oder einen Schieber (SP; SS) und mindestens ein zweites Bewegungselement (MMP; 10) für die Platten (P) oder die Stapel von Platten (P); einen Arbeitsbereich (AL) zur Unterstützung der Platten (P) und/oder der Stapel von Platten (P), der pneumatische Haltevorrichtungen des unter ersten pneumatischen Mitteln (30) und/oder zweiten pneumatischen Mitteln (50) ausgewählten Typs umfasst, die dazu eingerichtet sind, einen "Vakuum-Haltemodus" auf der Unterseite von mindestens einer Platte (P) oder einer unteren Platte eines mindestens einen Stapels von Platten (P), der auf dem Arbeitsbereich (AL) bearbeitet wird, zu erzeugen; **und dadurch, dass** die folgenden Schritte in beliebiger Reihenfolge ausgeführt werden:
(f1) Festlegen der Position der ersten pneumatischen Mittel (30) und/oder der zweiten pneumatischen Mittel (50), die auf einem Arbeitsbereich (AL) verfügbar sind, mittels einer elektronischen Steuereinheit der Schneidemaschine (1);
(f2) Erfassen oder Bestimmen der Position von mindestens einer ersten Platte (P) oder von mindestens einem ersten Stapel von Platten (P), die auf dem Arbeitsbereich (AL) in Position zu fixieren sind, da sie auf eine nachfolgende Bewegung, Schneidung oder Abführung während des entsprechenden Schneidzylus warten;
(f3) Erfassen oder Bestimmen der Position von mindestens einer zweiten Platte (P) oder von mindestens einem zweiten Stapel von Platten (P) während des entsprechenden Schneidzylus auf dem Arbeitsbereich (AL);
(f4) Fixieren der mindestens einen ersten Platte (P) oder der unteren Platte des mindestens einen ersten Stapel von Platten (P) in Position auf dem Arbeitsbereich (AL) durch Aktivierung der ersten pneumatischen Mittel (30) und/oder der zweiten pneumatischen Mittel (50) im "Vakuum-Haltemodus";
(f5) Bewegen, in maskierter Zeit und während der vorherigen Phase (f4), der mindestens einen zweiten Platte (P) oder des mindestens zweiten Plattenstapels (P) mittels der Schieber (SP, SS) oder der zweiten Bewegungseinrichtungen (MMP; 10);
(f6) Freigabe der mindestens einen ersten Platte (P) oder der unteren Platte des mindestens einen ersten Stapels von Platten (P) durch Deaktivierung der ersten pneumatischen Mittel (30) und/oder der zweiten pneumatischen Mittel (50), wodurch der vorherige Bewegungsmodus des darunterliegenden Arbeitsbereichs (AL) wiederhergestellt wird;
(f7) Bewegung der mindestens einen ersten Platte (P) oder des mindestens ersten Stapels von Platten (P).

## Revendications

1. Machine à découper (1) pour la coupe de panneaux (P) en bois, polymères, matériaux composites, fibres-ciment ou similaires, la machine comprenant une base (3) ; un poste de coupe (2) ; au moins un poussoir (SP ; SS) configuré pour déplacer au moins un panneau (P) ou au moins une pile de panneaux (P), à travers ledit poste de coupe (2) suivant une première direction (F2) sensiblement orthogonale par rapport audit poste de coupe (2) ; un groupe de coupe (GRT) monté dans ledit poste de coupe (2) et mobile dans une deuxième direction (F1) le long d'une ligne de coupe (LT) sensiblement perpendiculaire à ladite première direction (F2) pour effectuer la coupe dudit au moins un panneau (P) ou de ladite au moins une pile de panneaux (P) ; une zone de travail (AL) configurée pour le support et la manutention de panneaux (P) ou de piles de panneaux (P) ; ladite zone de travail (AL) étant définie par l'ensemble d'un plan d'alimentation (8), d'un plan de base de travail (5) et d'un plan de support (9) ; une unité de commande électronique configurée pour la gestion et le contrôle de tous les organes de la machine à découper (1) ; la machine à découper (1) étant **caractérisée en ce que** ladite zone de travail (AL) comprend des moyens pneumatiques d'un type choisi parmi des premiers moyens pneumatiques (30) et/ou des seconds moyens pneumatiques (50) configurés pour générer une « rétention par vide pneumatique » sur au moins un premier panneau (P) ou sur un panneau inférieur d'au moins une première pile de panneaux (P) pour le blocage temporaire en position sur ladite zone de travail (AL) dudit au moins un premier panneau (P) ou dudit panneau inférieur (P) de ladite au moins une première pile de panneaux (P) dans l'attente d'une opération ultérieure choisie parmi la manutention, le découpage ou le déchargement ; un poussoir (SP ; SS) et au moins un second poussoir (SP ; SS) ou un poussoir (SP ; SS) et au moins un second moyen de manutention (MMP ; 10) configurés pour déplacer au moins un deuxième panneau (P) ou au moins une deuxième pile de panneaux (P) sensiblement en même temps, et donc en temps masqué, pendant ledit blocage temporaire dudit au moins un premier panneau (P) ou dudit panneau inférieur (P) de ladite au moins une première pile de panneaux (P) ; **et en ce que** l'unité de commande électronique est configurée pour définir la position desdits premiers moyens pneumatiques (30) et/ou desdits seconds moyens pneumatiques (50) disponibles sur la zone de travail (AL), pour acquérir et/ou déterminer la position dudit au moins un premier panneau (P) ou dudit un panneau inférieur d'au moins une première pile de panneaux (P) à bloquer en position sur ladite zone de travail (AL), et pour acquérir et/ou déterminer la position dudit au moins un deuxième panneau (P) ou d'au moins une deuxième pile de panneaux (P) à déplacer sur ladite zone de travail (AL).

2. Machine à découper (1) selon la revendication 1, **caractérisée en ce que** l'unité de commande électronique est en outre configurée pour acquérir et/ou déterminer les dimensions dudit au moins un premier panneau (P) ou dudit panneau inférieur de ladite au moins une première pile de panneaux (P) à bloquer en position sur la zone de travail (AL).

3. Machine à découper (1) selon la revendication 1 ou la revendication 2 **caractérisée en ce que** l'unité de commande électronique comprend au moins une unité de commande pour sélectionner la direction du flux d'air vers lesdits moyens pneumatiques (30) configurée pour l'activation desdits moyens pneumatiques (30) dans un mode « rétention par vide pneumatique" dans lequel l'air entre aspiré dans les moyens pneumatiques (30) ou configurée pour l'activation desdits moyens pneumatiques (30) dans un mode « coussin d'air » dans lequel l'air s'échappe des moyens pneumatiques (30).

4. Machine à découper (1) selon la revendication 3, **caractérisée en ce que** lesdits premiers moyens pneumatiques (30) comprennent au moins un dispositif pneumatique ((SET), (SET1), (SET2), (SET3), (SET4), (SET5), (SET6)) ; ledit au moins un dispositif pneumatique ((SET), (SET1), (SET2), (SET3), (SET4), (SET5), (SET6)) comprenant des moyens d'étanchéité respectifs configurés pour la séparation de celui-ci par rapport aux autres dispositifs pneumatiques ((SET), (SET1), (SET2), (SET3), (SET4), (SETS), (SET6)).

5. Machine à découper (1) selon la revendication 4, **caractérisée en ce que** l'unité de commande électronique comprend au moins une unité de commande pour sélectionner la direction du flux d'air vers lesdits dispositifs pneumatiques ((SET), (SET1), (SET2), (SET3), (SET4), (SET5), (SET6)) configurée pour l'activation sélective d'un ou plusieurs dispositifs pneumatiques ((SET), (SET1), (SET2), (SET3), (SET4), (SET5), (SET6)) dans un mode « rétention par vide pneumatique" et un ou plusieurs dispositifs pneumatiques ((SET), (SET1), (SET2), (SET3), (SET4), (SET5), (SET6)) dans un mode « coussin d'air ».

6. Machine à découper (1) selon la revendication 1 ou la revendication 2, **caractérisée en ce que** lesdits seconds moyens pneumatiques (50) comprennent au moins un dispositif pneumatique (DASP) muni de moyens à ventouse (VNT) configuré pour adhérer à la surface inférieure d'au moins un panneau (P) reposant sur la zone de travail (AL).

7. Machine à découper (1) selon la revendication 6, **caractérisée en ce que** ledit au moins un dispositif pneumatique (DASP) est relevable.

8. Machine à découper (1) selon l'une quelconque des revendications 6 ou 7, **caractérisée en ce que** ladite unité de commande électronique est configurée pour actionner sélectivement ledit au moins un dispositif pneumatique (DASP) dans un mode « rétention par vide pneumatique » seul, ou de concert avec des dispositifs pneumatiques similaires (DASP).

9. Machine à découper (1) selon l'une quelconque des revendications 3 à 5 et l'une quelconque des revendications 6 à 8,-**caractérisée en ce que** ladite zone de travail (AL) fournit lesdits premiers moyens pneumatiques (30) et lesdits seconds moyens pneumatiques (50).

10. Machine à découper (1) selon l'une quelconque des revendications précédentes, **caractérisée en ce que** la sélection desdits moyens pneumatiques d'un type choisi parmi les premiers moyens pneumatiques (30) et/ou les seconds moyens pneumatiques (50) à activer dans le mode « rétention par vide pneumatique » est effectuée par l'unité de commande électronique de la machine à découper (1) elle-même en fonction de la position desdits moyens pneumatiques d'un type choisi parmi des premiers moyens pneumatiques (30) et/ou des seconds moyens pneumatiques (50) sur la zone de travail (AL), et/ou de la taille dudit au moins un panneau (P) et/ou dudit au moins un panneau inférieur (P) de ladite au moins une pile de panneaux (P) à retenir et/ou en fonction de la position instantanée que ledit au moins un panneau (P) et/ou ledit au moins un panneau inférieur (P) de ladite au moins une pile de panneaux (P) occupe sur ladite zone de travail (AL).

11. Machine à découper (1) selon l'une quelconque des revendications précédentes, **caractérisée en ce qu'**elle comprend en outre au moins un manipulateur robotisé (10) comprenant à son tour des moyens de préhension (10C) ; ledit au moins un manipulateur robotisé (10) configuré pour prélever et déplacer au moins un panneau (P) en entrée et en sortie dudit poste de coupe (2) et/ou pour décharger ledit au moins un panneau (P) en dehors de la zone de travail (AL).

12. Machine à découper selon la revendication 11, **caractérisée en ce que** l'unité de commande électronique est configurée pour bloquer en position sur ladite zone de travail (AL) un panneau inférieur (P) d'au moins une pile de panneaux (P) par l'activation desdits premiers moyens pneumatiques (30) et/ou desdits seconds moyens pneumatiques (50) en mode « rétention par vide pneumatique » pendant le prélèvement et le levage du panneau supérieur (P) de la même pile de panneaux (P) par le manipulateur robotisé (10).

13. Procédé de blocage en position, sur la zone de travail (AL), d'au moins un panneau (P) ou d'au moins une pile de panneaux (P) tout en permettant, sensiblement simultanément, la manutention, sur la zone de travail (AL), d'au moins un deuxième panneau (P) ou d'au moins une deuxième pile de panneaux (P) au cours du processus d'usinage de panneaux (P) en configuration plane dans une machine à découper, **caractérisé par** la fourniture d'une machine à découper selon l'une quelconque des revendications 1 à 12 où la machine à découper comprend : au moins un poste de coupe (2) comprenant, à son tour, au moins un outil d'usinage pour usiner des panneaux (P) ou des piles de panneaux (P) ; un poussoir (SP ; SS) et au moins un second poussoir (SP ; SS) ou un poussoir (SP ; SS) et au moins un second moyen de manutention (MMP ; 10) desdits panneaux (P) ou desdites piles de panneaux (P) ; une zone de travail (AL) pour supporter lesdits panneaux (P) et/ou lesdites piles de panneaux (P) comprenant des moyens de rétention pneumatique d'un type choisi parmi des premiers moyens pneumatiques (30) et/ou des seconds moyens pneumatiques (50) configurés pour générer une « rétention par vide pneumatique » sur la surface inférieure d'au moins un panneau (P) ou d'un panneau inférieur d'au moins une pile de panneaux (P) en cours d'usinage sur la zone de travail (AL) ; **et par** les étapes suivantes exécutées dans un ordre quelconque, consistant à :
(f1) définir, au moyen d'une unité de commande électronique de la machine à découper (1), la position de premiers moyens pneumatiques (30) et/ou de seconds moyens pneumatiques (50) disponibles sur une zone de travail (AL) ;
(f2) acquérir ou déterminer la position d'au moins un premier panneau (P) ou d'au moins une première pile de panneaux (P) à bloquer en position sur la zone de travail (AL) dans l'attente d'une opération ultérieure de manutention, de découpage ou de déchargement pendant le cycle de découpe correspondant ;
(f3) acquérir ou déterminer la position d'au moins un deuxième panneau (P) ou d'au moins une deuxième pile de panneaux (P) pendant le cycle de découpage correspondant sur la zone de travail (AL) ;
(f4) bloquer en position sur la zone de travail (AL) ledit au moins premier panneau (P) ou un panneau inférieur (P) de ladite au moins première pile de panneaux (P) par l'activation desdits premiers moyens pneumatiques (30) et/ou desdits seconds moyens pneumatiques (50) dans un mode « rétention par vide pneumatique » ;
(f5) déplacer en temps masqué à l'aide de moyens de poussée (SP, SS) ou de seconds moyens de manutention (MMP ; 10) au cours de l'étape précédente (f4) ledit au moins un deuxième panneau (P) ou ladite au moins une deuxième pile de panneaux (P) ;
(f6) libérer ledit au moins premier panneau (P) ou ledit panneau inférieur (P) de ladite au moins une première pile de panneaux (P) par la désactivation desdits premiers moyens pneumatiques (30) et/ou desdits seconds moyens pneumatiques (50) en rétablissant le mode de manutention précédent de la zone de travail sous-jacente (AL) ;
(f7) déplacer ledit au moins premier panneau (P) ou ladite au moins première pile de panneaux (P).
